(19) Europäisches Patentamt / European Patent Office / Office européen des brevets

(11) EP 4 707 337 A1

(12) EUROPEAN PATENT APPLICATION

(43) Date of publication:
11.03.2026 Bulletin 2026/11

(21) Application number: 24199392.2

(22) Date of filing: 10.09.2024

(51) International Patent Classification (IPC):
*C08L 69/00* (2006.01) *C08L 83/10* (2006.01)

(52) Cooperative Patent Classification (CPC):
(C-Sets available)
**C08L 69/00; C08L 83/10;** C08L 2201/02; C08L 2205/025; C08L 2205/03 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SHPP Global Technologies B.V.**
**4612 PX Bergen op Zoom (NL)**

(72) Inventors:
- **Shan, Wei**
  **Shanghai, 201319 (CN)**
- **Ji, Weiyun**
  **Shanghai, 201319 (CN)**
- **Vollenberg, Peter**
  **Mt. Vernon, 47620 (US)**

(74) Representative: **Modiano, Gabriella Diana et al**
**Modiano & Partners SA**
**Steinsdorfstraße 14**
**80538 München (DE)**

# (54) FLAME RETARDANT POLYCARBONATE COMPOSITIONS WITH IMPROVED HEAT RESISTANCE

(57) Thermoplastic compositions include: a. from about 10 wt% to about 90 wt% of a polycarbonate homopolymer component; b. from about 1 wt% to about 90 wt% of a polycarbonate copolymer component; c. from about 1 wt% to about 15 wt% of a flame retardant component including a spirocyclophosphazene flame retardant additive; and d. from about 0.05 wt% to about 15 wt% of at least one additional additive. The compositions have improved UL94 flame retardant ratings and high heat distortion temperature (HDT) properties.

EP 4 707 337 A1

(52) Cooperative Patent Classification (CPC): (Cont.)

C-Sets
**C08L 69/00, C08L 69/00, C08L 83/10, C08K 5/5399, C08K 5/526;**
**C08L 69/00, C08L 83/10, C08K 5/5399, C08K 5/005;**
**C08L 83/10, C08L 69/00, C08K 5/5399, C08K 5/005;**
**C08L 83/10, C08L 69/00, C08L 69/00, C08K 5/5399, C08K 5/526**

## Description

### FIELD OF THE DISCLOSURE

The present disclosure relates to polycarbonate compositions, and in particular to polycarbonate compositions including a phosphazene flame retardant additive that have good flame retardance and heat resistance properties.

### BACKGROUND OF THE DISCLOSURE

Polycarbonate (PC) and its blends provide good mechanical properties, electrical properties, flame retardant (FR) performance, and wide color space applicability; as a result they have been widely used in multiple market segments such as electronics, mobility, industrial, infrastructure and medical devices. FR performance of plastic materials may be evaluated according to a UL94 standard; vertical burn tests in this standard include a 50W (V-0, V-1 or V-2 ratings) and a 500W (5VB rating) test. Several categories of flame retardant additives are known to help improve the UL94 V-x ratings of polycarbonate, including sulphonated FRs, phosphorous FRs, and silicones. Polycarbonate with sulphonated FR additives can typically only achieve a robust V-0 rating at a thickness of 1.5 millimeters (mm), even with an elevated FR content. In contrast, higher loadings of phosphorous FR additives could help polycarbonate achieve a V-0 rating even at a relatively low thickness. However, compared to sulphonated FR additives, phosphorous FR additives such as organophosphates typically have a negative effect on the heat resistance of polycarbonate. This could prevent their use in certain applications such as the enclosure of a mobile phone charger (which must pass a ball pressure test at 125 °C) and the back cover of a mobile phone (which must pass a boiling water test). Accordingly, there is a need for a flame retardant additive solution for polycarbonate that would help polycarbonate satisfy V-0 or other UL94 ratings at a relatively low thickness without a substantial loss of heat resistance properties.

These and other shortcomings are addressed by aspects of the present disclosure.

### SUMMARY

Aspects of the disclosure relate to thermoplastic compositions including:

a. from about 10 wt% to about 90 wt% of a polycarbonate homopolymer component;
b. from about 1 wt% to about 90 wt% of a polycarbonate copolymer component;
c. from about 1 wt% to about 15 wt% of a flame retardant component; and
d. from about 0.05 wt% to about 15 wt% of at least one additional additive,

wherein the flame retardant component comprises a cyclic phosphazene compound having an oxaphosphorin ring-containing structure, the cyclic phosphazene compound being represented by the following Formula (1):

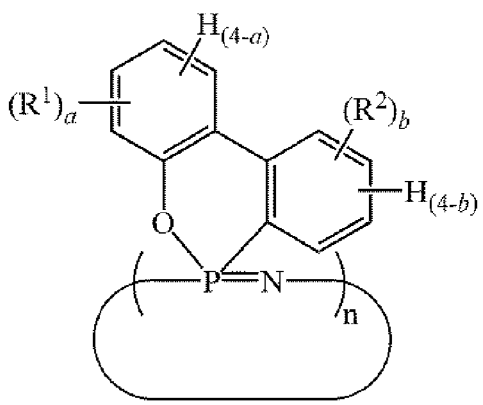

(1)

wherein n is an integer of 3 to 8,
$R^1$ and $R^2$ are (i) each independently any one of the groups of a nitro group, an alkyl group or an alkoxy group having 1 to 8 carbon atoms in which at least one group selected from the group consisting of alkyl groups having 1 to 6 carbon atoms and aryl groups may be substituted, and an aryl group or an aryloxy group having 6 to 20 carbon atoms in which at least one group selected from the group consisting of alkyl groups having 1 to 6 carbon atoms and aryl groups may be substituted; or (ii) forming, in-between them, a saturated or an unsaturated cyclic structure that may be substituted with an alkyl group having 1 to 6 carbon atoms or a

carbonyl group,
a and b are each independently an integer of 0 to 4, and
a type of the oxaphosphorin ring-containing structure of each repeating unit is independent, and

wherein the combined weight percent value of all components does not exceed 100 wt%, and all weight percent values are based on the total weight of the composition.

## DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate homopolymer" includes mixtures of two or more polycarbonate homopolymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed

that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

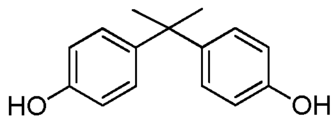

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Thermoplastic Compositions

Aspects of the disclosure relate to a thermoplastic composition including: a. from about 10 wt% to about 90 wt% of a polycarbonate homopolymer component; b. from about 1 wt% to about 90 wt% of a polycarbonate copolymer component; c. from about 1 wt% to about 15 wt% of a flame retardant component; and d. from about 0.05 wt% to about 15 wt% of at least one additional additive. The flame retardant component includes a cyclic phosphazene compound having an oxaphosphorin ring-containing structure, the cyclic phosphazene compound being represented by the following Formula (1):

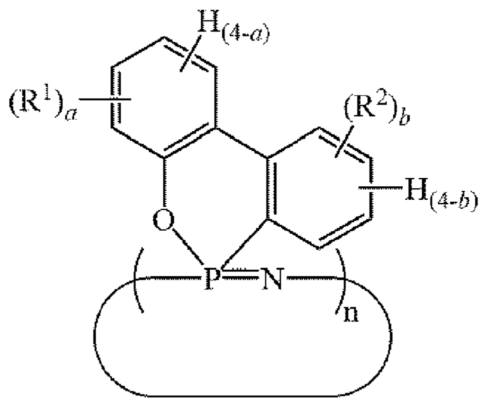

(1)

wherein n is an integer of 3 to 8,

$R^1$ and $R^2$ are (i) each independently any one of the groups of a nitro group, an alkyl group or an alkoxy group having 1 to 8 carbon atoms in which at least one group selected from the group consisting of alkyl groups having 1 to 6 carbon atoms and aryl groups may be substituted, and an aryl group or an aryloxy group having 6 to 20 carbon atoms in which at least one group selected from the group consisting of alkyl groups having 1 to 6 carbon atoms and aryl groups may be substituted; or (ii) forming, in-between them, a saturated or an unsaturated cyclic structure that may be substituted with an alkyl group having 1 to 6 carbon atoms or a carbonyl group,

a and b are each independently an integer of 0 to 4, and

a type of the oxaphosphorin ring-containing structure of each repeating unit is independent.

The combined weight percent value of all components does not exceed 100 wt%, and all weight percent values are based on the total weight of the composition.

In some aspects the polycarbonate homopolymer component includes a linear or branched polycarbonate.

In further aspects the polycarbonate homopolymer component includes a high heat branched polycarbonate monomer that is end-capped with 4-hydroxybenzonitrile (4-HBN). 4-HBN (CAS No. 767-00-0) has the following chemical structure:

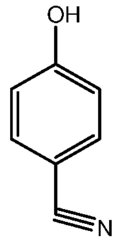

The end-capping agent, e.g., 4-HBN, may be present in the polycarbonate monomer in an amount from 1-8 mol%. In particular aspects the end-capping agent is present in the polycarbonate monomer in an amount of at least 1 mol%, or at least 2 mol%, or less than 8 mol%, or less than 7 mol%, or less than 6 mol%, or less than 5 mol%, or less than 4 mol%, or less than 3 mol%, or about 2 mol%. An exemplary high heat branched polycarbonate monomer that is end-capped with 4-HBN is CFR polycarbonate, available from SABIC.

In certain aspects the composition includes from about 25 wt% to about 90 wt% of the polycarbonate homopolymer component. In other aspects the composition includes at least 25 wt%, or at least 30 wt%, or at least 35 wt%, or at least 40 wt%, or at least 45 wt%, or at least 50 wt%, or at least 55 wt%, or at least 60 wt%, or at least 65 wt%, or at least 70 wt%, or at least 75 wt%, or at least 80 wt%, or at least 85 wt%, or at most 90 wt%, or at most 85 wt%, or at most 80 wt%, or at most 75 wt%, or at most 70 wt%, or at most 65 wt%, or at most 60 wt%, or at most 55 wt%, or at most 50 wt%, or at most 45 wt%, or at most 40 wt%, or at most 35 wt%, or at most 30 wt%, of the polycarbonate homopolymer component.

The polycarbonate copolymer component may include, but is not limited to, a polycarbonate-siloxane copolymer, a polycarbonate including repeat units of bisphenol-A monomer and a 3,3-bis(4-hydroxyphenyl)-2-phenylisoindolin-1-one (PPPBP) monomer ("PPPBP-PC"), or a combination thereof.

The term "PPPBP" as used herein refers to a compound having a structure represented by the formula:

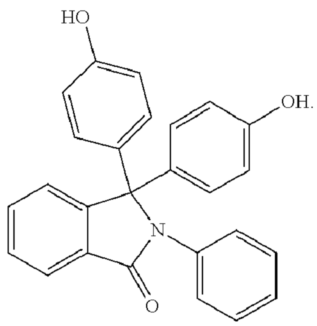

PPPBP can also be referred to by the following names: 2-Phenyl-3,3-bis(4-hydroxyphenyl)phthalimidine; N-Phenyl-3,3-bis(4-hydroxyphenyl)phthalimidine; 3,3-bis(4-hydroxyphenyl)-2-phenylisoindolin-1-one; 3,3-bis(4-hydroxyphenyl)-2-phenyl-2,3-dihydro-1H-isoindol-1-one. PPPBP has a CAS #6607-41-6. An exemplary PPPBP-PC is XHT resin, available from SABIC.

In some aspects the polycarbonate copolymer component includes a polycarbonate-siloxane copolymer having a siloxane content of from about 5 wt% to about 50 wt%, based on the total weight of the polycarbonate-siloxane copolymer. In further aspects the polycarbonate-siloxane copolymer has a siloxane content of from about 4-8 wt% (e.g., transparent EXL available from SABIC having a siloxane content of about 6 wt%), from about 18-22 wt% (e.g., opaque EXL available from SABIC having a siloxane content of about 20 wt%), and/or from about 35-45 wt% (such as a 40 wt% siloxane copolymer available from SABIC).

In further aspects the composition includes from about 5 wt% to about 70 wt% of the polycarbonate copolymer component. In specific aspects the composition includes at least 5 wt%, or at least 10 wt%, or at least 15 wt%, or at least 20 wt%, or at least 25 wt%, or at least 30 wt%, or at least 35 wt%, or at least 40 wt%, or at least 45 wt%, or at least 50 wt%, or at least 55 wt%, or at least 60 wt%, or at most 70 wt%, or at most 65 wt%, or at most 60 wt%, or at most 55 wt%, or at most 50 wt%, or at most 45 wt%, or at most 40 wt%, or at most 35 wt%, or at most 30 wt%, or at most 25 wt%, or at most 20 wt%, or at

most 15 wt%, of the polycarbonate copolymer component.

In specific aspects the composition includes from about 10 wt% to about 45 wt% of the polycarbonate copolymer component and from about 50 wt% to about 70 wt% of a polycarbonate-siloxane copolymer having a siloxane content of from about 4 wt% to about 8 wt%.

In further aspects the composition includes from about 60 wt% to about 90 wt% of the polycarbonate copolymer component and from about 5 wt% to about 25 wt% of a polycarbonate-siloxane copolymer having a siloxane content of from about 35 wt% to about 45 wt%.

In some aspects the flame retardant component includes a cyclic phosphazene compound being represented by the following Formula (2):

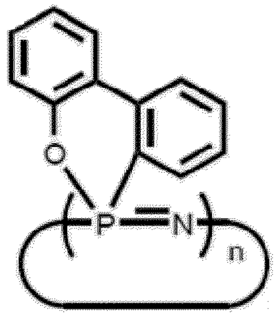

(2)

wherein n is an integer of 3 to 8.

This flame retardant component may be referred to as a spirocyclophosphazene. A conventional phosphazene FR is phenoxycyclophosphazene, which has the following Formula (3):

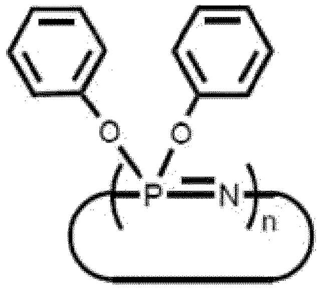

(3)

A conventional phenoxycyclophosphazene is available from Fushimi under the Rabitle™ product series (e.g., FP-110).

The composition includes from about 1 wt% to about 15 wt% of the flame retardant component. In further aspects the composition includes at least 1 wt%, or at least 2 wt%, or at least 3 wt%, or at least 4 wt%, or at least 5 wt%, or at least 6 wt%, or at least 7 wt%, or at least 8 wt%, or at least 9 wt%, or at least 10 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, of the flame retardant component.

The at least one additional additive may include, but is not limited to, an acid scavenger, an anti-drip agent, an antioxidant, a stabilizer, an antistatic agent, a chain extender, a colorant, a release agent, a flow promoter, a lubricant, a plasticizer, a quenching agent, a flame retardant, a flame retardant synergist, a UV reflecting additive, an impact modifier, a blowing agent, a reinforcing agent, or a combination thereof.

In particular aspects the composition includes from about 0.05 wt% to about 0.2 wt% of the at least one additional additive. In further aspects the composition includes at least 0.05 wt%, or at least 0.06 wt%, or at least 0.07 wt%, or at least 0.08 wt%, or at least 0.09 wt%, or at most 15 wt%, or at most 14 wt%, or at most 13 wt%, or at most 12 wt%, or at most 11 wt%, or at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, or at most 0.9 wt%, or at most 0.8 wt%, or at most 0.7 wt%, or at most 0.6 wt%, or at most 0.5 wt%, or at most 0.4 wt%, or at most 0.3 wt%, or at most 0.2 wt%, or at most 0.1 wt%, of the at least one additional additive.

Compositions according to aspects of the disclosure have improved flame retardant properties as compared to a comparative composition including a conventional phosphazene flame retardant additive (e.g., FP-110 phenoxycyclophosphazene). In specific aspects the composition has a UL94 V-0 rating at a thickness of 3.2 millimeters (mm). In further

aspects the composition has a UL94 V-0 rating at a thickness of less than 3.2 mm, such as 3.0 mm, or 2.5 mm, or 2.0 mm, or 1.5 mm.

In some aspects the composition has a heat distortion temperature (HDT) of at least 110 °C as evaluated according to ASTM D648 under a stress of 1.82 megapascals (MPa) and a part thickness of 3.2 mm. In further aspects the composition has a HDT of at least 111 °C, or at least 112 °C, or at least 113 °C, or at least 114 °C, or at least 115 °C, or at least 116 °C, or at least 117 °C, or at least 118 °C, or at least 119 °C, or at least 120 °C, or at least 121 °C, or at least 122 °C, or at most 160 °C, or at most 155 °C, or at most 150 °C, or at most 145 °C, or at most 140 °C, or at most 135 °C, or at most 130 °C, or at most 125 °C, as evaluated according to ASTM D648 under a stress of 1.82 MPa and a part thickness of 3.2 mm.

## Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

## Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In particular aspects the article is an enclosure for an electronic device. In specific aspects the article is a mobile phone charger housing or a back cover of a mobile phone.

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. A thermoplastic composition comprising:

a. from about 10 wt% to about 90 wt% of a polycarbonate homopolymer component;

b. from about 1 wt% to about 90 wt% of a polycarbonate copolymer component;
c. from about 1 wt% to about 15 wt% of a flame retardant component; and
d. from about 0.05 wt% to about 15 wt% of at least one additional additive,

wherein the flame retardant component comprises a cyclic phosphazene compound having an oxaphosphorin ring-containing structure, the cyclic phosphazene compound being represented by the following Formula (1):

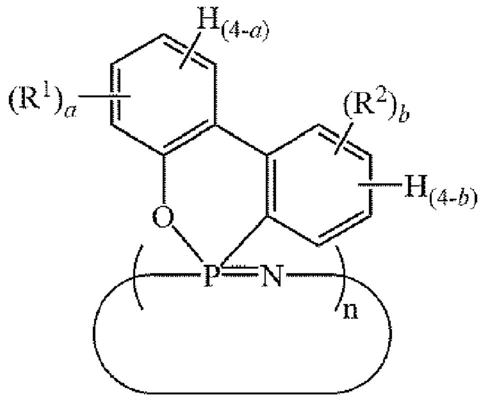

(1)

wherein n is an integer of 3 to 8,
$R^1$ and $R^2$ are (i) each independently any one of the groups of a nitro group, an alkyl group or an alkoxy group having 1 to 8 carbon atoms in which at least one group selected from the group consisting of alkyl groups having 1 to 6 carbon atoms and aryl groups may be substituted, and an aryl group or an aryloxy group having 6 to 20 carbon atoms in which at least one group selected from the group consisting of alkyl groups having 1 to 6 carbon atoms and aryl groups may be substituted; or (ii) forming, in-between them, a saturated or an unsaturated cyclic structure that may be substituted with an alkyl group having 1 to 6 carbon atoms or a carbonyl group,
a and b are each independently an integer of 0 to 4, and
a type of the oxaphosphorin ring-containing structure of each repeating unit is independent, and

wherein the combined weight percent value of all components does not exceed 100 wt%, and all weight percent values are based on the total weight of the composition.

Aspect 2. The thermoplastic composition according to Aspect 1, wherein the polycarbonate homopolymer component comprises a linear or branched polycarbonate.

Aspect 3. The thermoplastic composition according to Aspect 1 or 2, wherein the polycarbonate homopolymer component comprises a high heat branched polycarbonate monomer end-capped with 4-hydroxybenzonitrile (4-HBN).

Aspect 4. The thermoplastic composition according to any one of Aspects 1 to 3, wherein the composition comprises from about 25 wt% to about 90 wt% of the polycarbonate homopolymer component.

Aspect 5. The thermoplastic composition according to any one of Aspects 1 to 4, wherein the polycarbonate copolymer component comprises a polycarbonate-siloxane copolymer, a polycarbonate comprising repeat units of bisphenol-A monomer and a 3,3-bis(4-hydroxyphenyl)-2-phenylisoindolin-1-one (PPPBP) monomer ("PPPBP-PC"), or a combination thereof.

Aspect 6. The thermoplastic composition according to Aspect 5, wherein the polycarbonate copolymer component comprises a polycarbonate-siloxane copolymer.

Aspect 7. The thermoplastic composition according to Aspect 6, wherein the polycarbonate-siloxane copolymer has a siloxane content of from about 5 wt% to about 50 wt%.

Aspect 8. The thermoplastic composition according to any one of Aspects 1 to 7, wherein the composition comprises from about 5 wt% to about 70 wt% of the polycarbonate copolymer component.

Aspect 9. The thermoplastic composition according to any one of Aspects 1 to 8, wherein the flame retardant component comprises a cyclic phosphazene compound being represented by the following Formula (2):

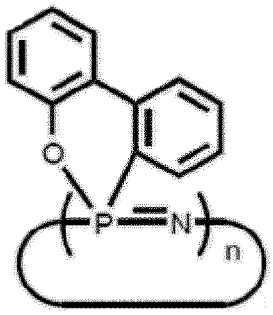

(2)

wherein n is an integer of 3 to 8.

Aspect 10. The thermoplastic composition according to any one of Aspects 1 to 9, wherein the composition comprises from about 3 wt% to about 8 wt% of the flame retardant component.

Aspect 11. The thermoplastic composition according to any one of Aspects 1 to 10, wherein the at least one additional additive comprises an acid scavenger, an anti-drip agent, an antioxidant, a stabilizer, an antistatic agent, a chain extender, a colorant, a release agent, a flow promoter, a lubricant, a plasticizer, a quenching agent, a flame retardant, a flame retardant synergist, a UV reflecting additive, an impact modifier, a blowing agent, a reinforcing agent, or a combination thereof.

Aspect 12. The thermoplastic composition according to any one of Aspects 1 to 11, wherein the composition comprises from about 0.05 wt% to about 0.2 wt% of the at least one additional additive.

Aspect 13. The thermoplastic composition according to any one of Aspects 1 to 12, wherein the composition has a UL94 V-0 rating at a thickness of 3.2 millimeters.

Aspect 14. The thermoplastic composition according to any one of Aspects 1 to 13, wherein the composition has a heat distortion temperature (HDT) of at least 110 °C as evaluated according to ASTM D648 under a stress of 1.82 megapascals (MPa) and a part thickness of 3.2 mm.

Aspect 15. An article comprising the thermoplastic composition according to any one of Aspects 1 to 14.

Aspect 16. The article according to Aspect 15, wherein the article is an enclosure of an electronic device.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Comparative and example compositions described herein included one or more of the components listed in Table 1:

**Table 1 - Components**

| Component | Description | Source |
|---|---|---|
| PC-Si-1 | PC-siloxane copolymer (6 wt% siloxane) | SABIC |
| PC-Si-2 | PC-siloxane copolymer (40 wt% siloxane) | SABIC |
| PC-1 | High flow linear bisphenol-A polycarbonate (BPAPC) | SABIC |
| PC-2 | Low flow linear BPAPC | SABIC |
| PPZ-1 | Rabitle® FP-110 phosphazene, FR additive | Fushimi |
| PPZ-2 | Spirocyclophosphazene, FR additive | Fushimi |
| AO | Irgafos® 168, antioxidant | BASF |

(continued)

| Component | Description | Source |
|---|---|---|
| PETS | Pentaerythrityl tetrastearate, mold release | FACI |
| TSAN | Styrene-acrylonitrile (SAN) encapsulated polytetrafluoroethylene (PTFE), anti-drip agent | SABIC |
| CB | Carbon black, colorant | Cabot |

The pellet compounding process was implemented on a lab extruder. If not specifically, the base resins and additives were fed from the throat. Compounding was run with a screw speed of 400 revolutions per minute (RPM) and an output of 40 kilograms per hour (kg/hr).

Temperature profiles and molding conditions are shown in Tables 2 and 3:

**Table 2 - Temperature Profiles for Compounding**

| Parameters | Unit | Condition |
|---|---|---|
| Feed (Zone 0) Temperature (Temp) | - | 50 |
| Zone 1 Temp | °C | 100 |
| Zones 2-11 Temp | °C | 265 |
| Die Temp | °C | 265 |

**Table 3 - Injection Molding Conditions**

| Molding parameters | Unit | Value |
|---|---|---|
| Pre-drying time | Hour | 4 |
| Pre-drying Temp | °C | 110 |
| Hopper Temp | °C | 50 |
| Zones 1-3 Temp | °C | 290 |
| Nozzle temp | °C | 300 |
| Mold temp | °C | 80 |

Tensile properties were evaluated according to ASTM D638 at a test speed of 50 millimeters per minute (mm/min). Tensile modulus and tensile stress at yield are reported in megapascals (MPa); tensile elongation at break is reported in percentage (%). Flexural properties were evaluated according to ASTM D790 at a test speed of 1.27 mm/min; results are reported in megapascals (MPa). Impact strength (notched Izod impact strength (NII)) was evaluated according to ASTM D256 at the indicated temperature using a pendulum energy of 5 pound-force per foot (1bf/ft); results are reported in joules per meter (J/m). Heat deflection temperature (HDT) was evaluated according to ASTM D648 under a stress of 1.82 megapascals (MPa) and a part thickness of 3.2 mm; results are reported in °C. Melt flow rate (MFR) was evaluated according to ASTM D1238 under a loading of 1.2 kilograms (kg) at 300 °C; results are reported in grams per 10 minutes (g/10 min). The vertical flame test was evaluated according to the UL94 standard. Glass transition temperature (Tg) in degrees Celsius (°C) was measured by differential scanning calorimetry (DSC) with a ramp rate of 20 °C/min.

Compositions were prepared according to table 4; all amounts are in weight percent (wt%):

**Table 4 - Comparative and Example Compositions**

| Component | C1 | C2 | C3 | Ex1 | Ex2 |
|---|---|---|---|---|---|
| PC-Si-1 | | | | 66.67 | |
| PC-Si-2 | | | 10 | | 10 |
| PC-1 | 32.94 | 32.94 | 42 | 13.24 | 39.91 |
| PC-2 | 62 | 62 | 41.76 | 15 | 45 |
| PPZ-1 | 5 | | 5 | | |
| PPZ-2 | | 5 | | 5 | 5 |

(continued)

| Component | C1 | C2 | C3 | Ex1 | Ex2 |
|---|---|---|---|---|---|
| AO | 0.06 | 0.06 | 0.09 | 0.09 | 0.09 |
| PETS | | | 0.3 | | |
| TSAN | | | 0.5 | | |
| CB | | | 0.35 | | |
| Total (wt%) | 100 | 100 | 100 | 100 | 100 |

Properties of the compositions were evaluated; results are shown in Table 5:

**Table 5 - Properties of Table 4 Compositions**

| Property | Unit | C1 | C2 | C3 | Ex1 | Ex2 |
|---|---|---|---|---|---|---|
| MFR | g/10 min | 15.4 | 15.8 | 11.2 | 17.0 | 14.9 |
| Tg | °C | 137.2 | 148.8 | - | 145.0 | 147.4 |
| NII, 23 °C | J/m | 927 | 885 | 865 | 652 | 914 |
| NII, 0 °C | J/m | - | 108 | - | 589 | 852 |
| NII, -20 °C | J/m | - | - | - | 164 | 806 |
| NII, -40°C | J/m | - | - | - | 139 | 706 |
| Flexural modulus | MPa | 2200 | 2370 | 2110 | 2290 | 2260 |
| Flexural stress at yield | MPa | 93 | 101 | 87.5 | 96.5 | 93.9 |
| HDT | °C | 116 | 124 | 112 | 118 | 122 |
| Tensile modulus | MPa | 2380 | 2500 | 2120 | 2210 | 2190 |
| Tensile stress at yield | MPa | 64.9 | 68.9 | 53.5 | 60.7 | 59.1 |
| Tensile elongation at break | % | 110 | 107 | 108 | 51 | 109 |
| UL94 Vx rating at 3.2mm | - | V-2 | No Rating | V-0 | V-0 | V-0 |
| UL94 Vx rating at 1.5mm | - | V-2 | V-2 | V-0 | V-2 | V-1 |

Composition C1 includes polycarbonate (PC) homopolymer with a conventional phosphazene FR additive (FP-110), it had a relatively low HDT and a UL94 V-2 rating even at a thickness of 3.2 mm. When the conventional phosphazene FR (FP-110) was replaced with the new spirocyclophosphazene (C2), HDT was significantly improved but the UL94 rating was decreased even further, with no rating at 3.2 mm due to a long flame-out time. In example compositions Ex1 and Ex2, the PC homopolymer was partially replaced with a polycarbonate-siloxane (PC-Si) copolymer. It was found that the UL94 rating at 3.2 mm was improved to V-0. Example composition Ex2 had a UL94 rating at 1.5 mm of V-1, indicating that the spirocyclophosphazene flame retardant additive has a good synergistic effect with the PC-siloxane copolymer. The HDT of Ex2 was 10 °C higher than comparative composition C3 at the same phosphazene FR loading, indicating that the spirocyclophosphazene FR additive provides an improved effect on heat resistance as compared to the conventional phosphazene FR additive. If additional FR synergists or anti-dripping agent (e.g., TSAN) were added, the UL94 rating of the example compositions would be expected to be further improved.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure

should be determined with reference to the appended claims, along with the full scope of equivalents to which such claims are entitled.

## Claims

**1.** A thermoplastic composition comprising:

a. from about 10 wt% to about 90 wt% of a polycarbonate homopolymer component;
b. from about 1 wt% to about 90 wt% of a polycarbonate copolymer component;
c. from about 1 wt% to about 15 wt% of a flame retardant component; and
d. from about 0.05 wt% to about 15 wt% of at least one additional additive,

wherein the flame retardant component comprises a cyclic phosphazene compound having an oxaphosphorin ring-containing structure, the cyclic phosphazene compound being represented by the following Formula (1):

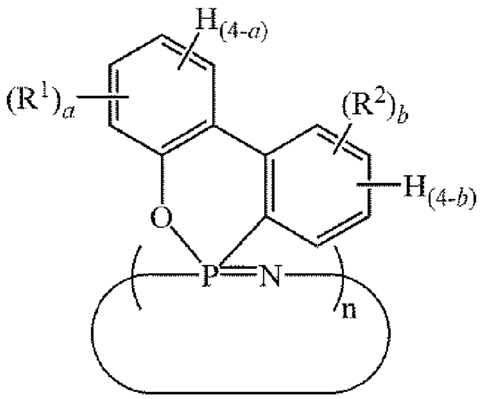

(1)

wherein n is an integer of 3 to 8,
$R^1$ and $R^2$ are (i) each independently any one of the groups of a nitro group, an alkyl group or an alkoxy group having 1 to 8 carbon atoms in which at least one group selected from the group consisting of alkyl groups having 1 to 6 carbon atoms and aryl groups may be substituted, and an aryl group or an aryloxy group having 6 to 20 carbon atoms in which at least one group selected from the group consisting of alkyl groups having 1 to 6 carbon atoms and aryl groups may be substituted; or (ii) forming, in-between them, a saturated or an unsaturated cyclic structure that may be substituted with an alkyl group having 1 to 6 carbon atoms or a carbonyl group,
a and b are each independently an integer of 0 to 4, and
a type of the oxaphosphorin ring-containing structure of each repeating unit is independent, and

wherein the combined weight percent value of all components does not exceed 100 wt%, and all weight percent values are based on the total weight of the composition.

**2.** The thermoplastic composition according to claim 1, wherein the polycarbonate homopolymer component comprises a linear or branched polycarbonate.

**3.** The thermoplastic composition according to claim 1 or 2, wherein the polycarbonate homopolymer component comprises a high heat branched polycarbonate monomer end-capped with 4-hydroxybenzonitrile (4-HBN).

**4.** The thermoplastic composition according to any one of claims 1 to 3, wherein the composition comprises from about 25 wt% to about 90 wt% of the polycarbonate homopolymer component.

**5.** The thermoplastic composition according to any one of claims 1 to 4, wherein the polycarbonate copolymer component comprises a polycarbonate-siloxane copolymer, a polycarbonate comprising repeat units of bisphenol-A monomer and a 3,3-bis(4-hydroxyphenyl)-2-phenylisoindolin-1-one (PPPBP) monomer ("PPPBP-PC"), or a combination thereof.

6. The thermoplastic composition according to claim 5, wherein the polycarbonate copolymer component comprises a polycarbonate-siloxane copolymer.

7. The thermoplastic composition according to claim 6, wherein the polycarbonate-siloxane copolymer has a siloxane content of from about 5 wt% to about 50 wt%.

8. The thermoplastic composition according to any one of claims 1 to 7, wherein the composition comprises from about 5 wt% to about 70 wt% of the polycarbonate copolymer component.

9. The thermoplastic composition according to any one of claims 1 to 8, wherein the flame retardant component comprises a cyclic phosphazene compound being represented by the following Formula (2):

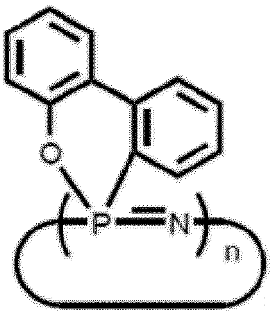

(2)

wherein n is an integer of 3 to 8.

10. The thermoplastic composition according to any one of claims 1 to 9, wherein the composition comprises from about 3 wt% to about 8 wt% of the flame retardant component.

11. The thermoplastic composition according to any one of claims 1 to 10, wherein the at least one additional additive comprises an acid scavenger, an anti-drip agent, an antioxidant, a stabilizer, an antistatic agent, a chain extender, a colorant, a release agent, a flow promoter, a lubricant, a plasticizer, a quenching agent, a flame retardant, a flame retardant synergist, a UV reflecting additive, an impact modifier, a blowing agent, a reinforcing agent, or a combination thereof.

12. The thermoplastic composition according to any one of claims 1 to 11, wherein the composition comprises from about 0.05 wt% to about 0.2 wt% of the at least one additional additive.

13. The thermoplastic composition according to any one of claims 1 to 12, wherein the composition has a UL94 V-0 rating at a thickness of 3.2 millimeters.

14. The thermoplastic composition according to any one of claims 1 to 13, wherein the composition has a heat distortion temperature (HDT) of at least 110 °C as evaluated according to ASTM D648 under a stress of 1.82 megapascals (MPa) and a part thickness of 3.2 mm.

15. An article comprising the thermoplastic composition according to any one of claims 1 to 14, wherein the article is an enclosure of an electronic device.

Europäisches Patentamt
European Patent Office
Office européen des brevets

# EUROPEAN SEARCH REPORT

Application Number
EP 24 19 9392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/028666 A1 (SHPP GLOBAL TECH BV [NL]) 8 February 2024 (2024-02-08)<br>* examples 9, 11; table 6 *<br>----- | 1-15 | INV.<br>C08L69/00<br>C08L83/10 |
| A | US 2023/383120 A1 (CHELLAMUTHU MANOJKUMAR [US] ET AL) 30 November 2023 (2023-11-30)<br>* example 10; table 8 *<br>----- | 1-15 | |
| A | US 8 895 649 B2 (SABIC INNOVATIVE PLASTICS IP [NL]; SABIC GLOBAL TECHNOLOGIES BV [NL]) 25 November 2014 (2014-11-25)<br>* examples 2, 3; table 4 *<br>----- | 1-15 | |
| A | ZHU CHEN ET AL: "An efficient flame retardant for silicone rubber: Preparation and application",<br>POLYMER DEGRADATION AND STABILITY,<br>vol. 121, 17 August 2015 (2015-08-17), pages 42-50, XP029296295,<br>ISSN: 0141-3910, DOI: 10.1016/J.POLYMDEGRADSTAB.2015.08.008<br>* page 43, left-hand column, line 46 - page 49, right-hand column, line 20 *<br>----- | 1-15 | TECHNICAL FIELDS SEARCHED (IPC)<br>C08L |
| A | GB 2 304 716 A (MINNESOTA MINING & MFG [US]) 26 March 1997 (1997-03-26)<br>* page 13, line 1 - page 32, line 4; examples 1-12 *<br>----- | 1-15 | |

The present search report has been drawn up for all claims

1

| Place of search | Date of completion of the search | Examiner |
|---|---|---|
| The Hague | 24 February 2025 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 19 9392

This annex lists the patent family members relating to the patent documents cited in the above-mentioned European search report. The members are as contained in the European Patent Office EDP file on
The European Patent Office is in no way liable for these particulars which are merely given for the purpose of information.

24-02-2025

| Patent document cited in search report | Publication date | Patent family member(s) | Publication date |
|---|---|---|---|
| WO 2024028666 A1 | 08-02-2024 | EP 4317290 A1 | 07-02-2024 |
| | | WO 2024028666 A1 | 08-02-2024 |
| US 2023383120 A1 | 30-11-2023 | CN 117126522 A | 28-11-2023 |
| | | EP 4282919 A1 | 29-11-2023 |
| | | US 2023383120 A1 | 30-11-2023 |
| US 8895649 B2 | 25-11-2014 | CN 104334638 A | 04-02-2015 |
| | | CN 104350098 A | 11-02-2015 |
| | | CN 104364313 A | 18-02-2015 |
| | | CN 104395402 A | 04-03-2015 |
| | | CN 104395403 A | 04-03-2015 |
| | | CN 104428354 A | 18-03-2015 |
| | | CN 104583316 A | 29-04-2015 |
| | | CN 104704059 A | 10-06-2015 |
| | | CN 107434907 A | 05-12-2017 |
| | | EP 2855570 A1 | 08-04-2015 |
| | | EP 2855575 A2 | 08-04-2015 |
| | | EP 2855581 A1 | 08-04-2015 |
| | | EP 2855585 A1 | 08-04-2015 |
| | | EP 2855586 A1 | 08-04-2015 |
| | | EP 2855587 A1 | 08-04-2015 |
| | | EP 2855588 A1 | 08-04-2015 |
| | | EP 2855593 A2 | 08-04-2015 |
| | | EP 3202851 A1 | 09-08-2017 |
| | | KR 20150013758 A | 05-02-2015 |
| | | KR 20150013814 A | 05-02-2015 |
| | | KR 20150013897 A | 05-02-2015 |
| | | KR 20150023341 A | 05-03-2015 |
| | | KR 20150023453 A | 05-03-2015 |
| | | KR 20150023463 A | 05-03-2015 |
| | | US 2013313493 A1 | 28-11-2013 |
| | | US 2013317141 A1 | 28-11-2013 |
| | | US 2013317143 A1 | 28-11-2013 |
| | | US 2013317144 A1 | 28-11-2013 |
| | | US 2013317145 A1 | 28-11-2013 |
| | | US 2013317146 A1 | 28-11-2013 |
| | | US 2013317147 A1 | 28-11-2013 |
| | | US 2013317148 A1 | 28-11-2013 |
| | | WO 2013175445 A2 | 28-11-2013 |
| | | WO 2013175450 A2 | 28-11-2013 |
| | | WO 2013175451 A1 | 28-11-2013 |
| | | WO 2013175453 A1 | 28-11-2013 |
| | | WO 2013175455 A1 | 28-11-2013 |
| | | WO 2013175456 A1 | 28-11-2013 |
| | | WO 2013177497 A1 | 28-11-2013 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 24 19 9392

This annex lists the patent family members relating to the patent documents cited in the above-mentioned European search report. The members are as contained in the European Patent Office EDP file on
The European Patent Office is in no way liable for these particulars which are merely given for the purpose of information.

24-02-2025

| Patent document cited in search report | Publication date | Patent family member(s) | Publication date |
|---|---|---|---|
| | | WO 2013177558 A1 | 28-11-2013 |
| GB 2304716 A | 26-03-1997 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 80-05-7
- *CHEMICAL ABSTRACTS*, 767-00-0
- *CHEMICAL ABSTRACTS*, 6607-41-6